# EUROPEAN PATENT SPECIFICATION

(11) **EP 2 236 394 B1**
(45) Date of publication and mention of the grant of the patent: **20.03.2013**
(21) Application number: 10157934.0
(22) Date of filing: 26.03.2010
(51) Int. Cl.: B62D 7/14, B62D 7/15

(54) **Rear wheel steering control system**
Lenksteuerungssystem für das Hinterrad
Système de commande de direction de roue arrière

(30) Priority: 30.03.2009 JP 2009081689; 19.08.2009 JP 2009190213
(43) Date of publication of application: 06.10.2010
(73) Proprietor: Honda Motor Co., Ltd., Tokyo 107-8556 (JP)
(72) Inventor: Nishizawa, Shogo, Saitama 351-0193 (JP); Horiuchi, Yutaka, Saitama 351-0193 (JP); Sasaki, Hitoshi, Saitama 351-0193 (JP); Sasaki, Hiroaki, Saitama 351-0193 (JP)
(74) Representative: Trossin, Hans-Jürgen

(56) References cited:
- US-A- 4 971 174
- US-A- 5 502 639
- US-A- 5 521 820

## Description

### TECHNICAL FIELD

The present invention relates to a rear wheel steering control system configured to improve the motion stability of a vehicle by controlling the rear toe angle of the vehicle according to the operating condition of the vehicle.

### BACKGROUND OF THE INVENTION

Various vehicle behavior control systems have been proposed. A vehicle behavior control system control the behavior of the vehicle typically for the purpose of improving the motion stability of the vehicle. For instance, a rear wheel toe angle control system (RTC system) controls the rear wheel toe angle according to the vehicle speed, front wheel steering angle, braking condition and other operating conditions of the vehicle so that the yaw response or heading response of the vehicle may be improved at low speeds and the motion stability of the vehicle may be improved at high speeds. See Japanese patent No. 3179272. In particular, a RTC system may be able to prevent an oversteer tendency while cornering at a high speed and allow the vehicle to maintain a straight attitude under heavy braking.

In a vehicle equipped with a RTC system, typically, a target rear toe angle is computed from the front wheel steering angle and vehicle speed, and the actuator for steering the rear wheels is actuated so as to make the actual rear toe angle follow the target rear toe angle by a feedback control. The proportional feedback control is the most common form of feedback control, but has the disadvantage that the steady state deviation cannot be totally eliminated. The integral feedback control is known to be effective in eliminating the steady state deviation. Therefore, the integral feedback control is often combined with the proportional feedback control for an optimum result.

However, the integral feedback control depends on the accumulation or integration of a deviation for the control action thereof so that a certain amount of time is required for the integral control to come into effect. Therefore, depending on the behavior and/or the operating condition of the control system such as a RTC system, the integral control may cause an excessive overshoot in the response of the control system, and a poor performance in tracking the target value may result.

In the case of a RTC system, when the angular motion of the steering wheel is reversed in an effort to reverse the course of the vehicle, and the deviation of the control system changes signs, the integral control may impair the tracking capability or the responsiveness of the control system because the integral control is heavily affected by the preceding level of the deviation. Also, as the actuator experiences a change in the frictional resistance to the movement of the output end from static friction to kinetic friction, a large deviation may be temporarily produced, and this may be followed by an excessive compensation by the actuator. In such a case, the integrated value of the deviation builds up to such an extent that the integral control tends to cause an excessive overshoot. Similarly, when the target toe angle changes rapidly, the instantaneous value of the control deviation between the target toe angle and actual toe angle may be such that the integral control tends to overreact, and may cause an excessive overshoot.

### BRIEF SUMMARY OF THE INVENTION

In view of such problems of the prior art, a primary object of the present invention is to provide a rear wheel steering control system that enables an actual toe angle of a vehicle to favorably follow a target toe angle without causing an excessive overshoot.

A second object of the present invention is to provide a rear wheel steering control system that can minimize a steady state deviation between an actual toe angle of a vehicle and a target toe angle without causing an excessive overshoot. These objects are achieved by a rear wheel steering control system exhibiting the features characterised in independent claim 1.

According to the present invention, such an object can be accomplished at least partly by providing a rear wheel steering control system for a four wheeled vehicle, comprising a target toe angle setting unit for setting a target toe angle of rear wheels of the vehicle according to an operating condition of the vehicle, an actuator for steering the rear wheels, and a toe angle sensor for detecting an actual toe angle of the rear wheels; and a control unit for providing a control signal to the actuator, the control unit including a base controller that provides a base control output corresponding to a deviation between the target toe angle and actual toe angle, and an integral controller that provides an integral control output corresponding to an integrated value of the deviation, characterized by that: the control system further comprises a reset control unit at least for reducing the integrated value of the deviation under a prescribed operating condition of the control system. The integrated value of the deviation may be simply canceled. Typically, the base controller provides a proportional control output proportional to a deviation between the target toe angle and actual toe angle, and the integral controller provides an integral control output proportional to an integrated value of the deviation.

Thereby, a steady state deviation between an actual toe angle of a vehicle can be minimized owing to the control action of the integral controller without the disadvantage of an excessive overshoot which the integral control may bring under certain conditions. Therefore, the rear wheel steering control system enables an actual toe angle of a vehicle to favorably follow a target toe angle without causing an excessive overshoot under all conditions.

According to the present invention, the control system is configured to detect a sign of the deviation, and store the detected sign at a regular interval, the reset control unit at least reducing the integrated value of the deviation when a change in the sign of the deviation is detected.

Thereby, when the steering direction is reversed or when the angular movement of the steering wheel is reversed, the integrated value of the deviation is reduced so that an excessive overshoot in the actual toe angle can be avoided.

Alternatively, according to the present invention, the control system is configured to store the actual toe angle at a regular interval, the reset control unit at least reducing the integrated value of the deviation when a difference between a current actual toe angle and a previously stored actual toe angle is greater than a prescribed threshold value.

Thereby, when an actuator experiences a change in the frictional resistance to an output end thereof from static friction to kinetic friction, the integrated value of the deviation is reduced so that an excessive overshoot in the actual toe angle can be avoided.

Further alternatively according to the present invention, the control system is configured to store the target toe angle at a regular interval, the reset control unit at least reducing the integrated value of the deviation when a difference between a current target toe angle and a previously stored target toe angle is greater than a prescribed threshold value.

Thereby, when an excessive rise in the control deviation between a target toe angle and an actual toe angle is caused by rapid changes in the target toe angle, the integrated value of the deviation is reduced so that an excessive overshoot in the actual toe angle can be avoided.

### BRIEF DESCRIPTION OF THE DRAWINGS

Now the present invention is described in the following with reference to the appended drawings, in which:
Figure 1 is a schematic diagram of a four wheeled vehicle incorporated with a rear wheel steering control system embodying the present invention;
Figure 2 is a functional block diagram showing the overall structure of the rear wheel steering control system;
Figure 3 is a flowchart of a control process in which an integral control is reset when a steering direction is reversed;
Figure 4 is a flowchart of a control process in which an integral control is reset when an actuator experiences a change in the frictional resistance to an output end thereof from static friction to kinetic friction; and
Figure 5 is a flowchart of a control process in which an integral control is reset when an excessive rise in the control deviation between a target toe angle and an actual toe angle is caused by rapid changes in the target toe angle.

### DETAILED DESCRIPTION OF THE PREFERRED EMBODIMENTS

A rear wheel steering control system for a four wheeled vehicle embodying the present invention is described in the following with reference to the appended drawings. In the following description, the component parts associated with each wheel are denoted, in some places, with numerals including a suffix such as R and L indicating on which side the particular component is located, but in other places without a suffix to collectively denote the particular component parts.

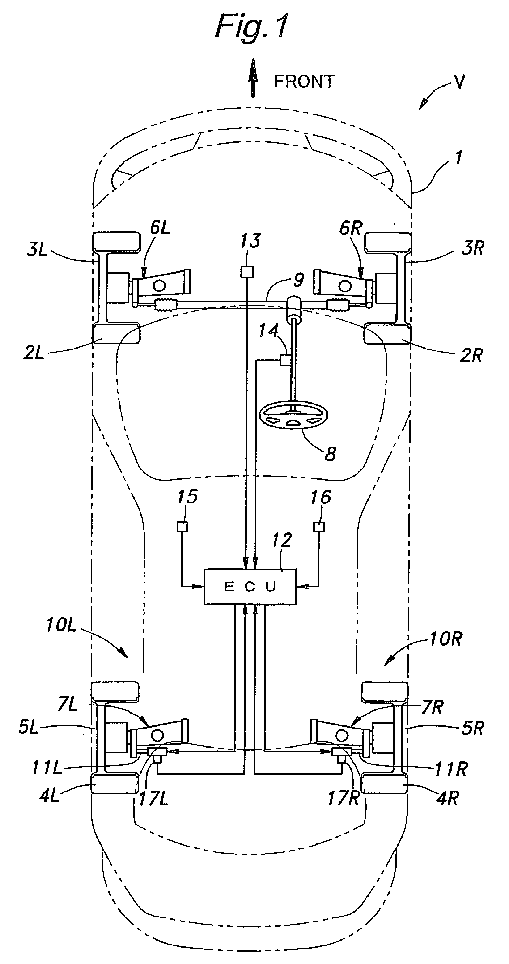

Referring to Figure 1 illustrating a four wheeled vehicle V incorporated with a rear wheel steering system embodying the present invention, the vehicle V comprises a pair of front wheels 3L and 3R each fitted with a pneumatic tire 2L, 2R, and a pair of rear wheels 5L and 5R each fitted with a pneumatic tire 4L, 4R, and these wheels are supported by a vehicle body 1 via corresponding wheel suspension units 6L, 6R, 7L and 7R.

The vehicle V additional comprises a front wheel steering system 9 that allows the front wheels 3 to be steered via a rack and pinion mechanism by turning a steering wheel 8, and a rear wheel steering control system 10 that allows the toe angle of the rear wheels 5L and 5R to be changed via electric actuators 11L and 11R according to the operating conditions of the vehicle as will be described hereinafter.

The vehicle V comprises, in addition to an ECU (electronic control unit) 12 responsible for various onboard systems of the vehicle V, a vehicle speed sensor 13, a front wheel steering angle sensor 14, a yaw rate sensor 15 and a lateral acceleration sensor 16. The output signals of these sensors are forwarded to the ECU 12, and used for the control of the rear wheel steering control system and other onboard control systems. The front wheel steering angle sensor 14 detects the angular displacement of the steering wheel 8 which is converted into the steering angle of the front wheels 3 by the sensor itself or by the control unit. The yaw rate sensor 15 is typically placed in a central position of the vehicle body, and detects the yaw rate of the vehicle body. The lateral acceleration sensor 16 detects the lateral acceleration that acts upon the vehicle body.

The ECU 12 essentially consists of a microcomputer, ROM, RAM, peripheral circuits, input and output interfaces and various drivers, and is connected to the sensors 13 to 16 and actuators 11 via a communication line such as CAN (controlled area network). The ECU 12 computes a target toe angle of the rear wheels 5 according to the output signals of the sensors 13 to 16, and determines the actual positions of the actuators 11 (actual toe angle) to carry out the toe angle control for the rear wheels 5.

Each actuator 11 is incorporated with a toe angle sensor 17 that detects a stroke position of an output rod thereof, and the output signal of the toe angle sensor 17 is forwarded to the ECU 12. The feedback control of the actuator 11 is then carried out according to the deviation between the detected actual toe angle and the computed target toe angle.

When the rear wheels 5 are steered in a symmetric pattern, the toe-in and toe-out of the rear wheels can be changed as desired. When the rear wheels 5 are steered in a same direction, the four wheel steering of the vehicle can be achieved. If the rear wheels are steered in an opposite phase relationship to the front wheels, the maneuverability of the vehicle, particularly in low speed ranges, can be improved. If the rear wheels are steered in a same phase relationship to the front wheels, the motion stability of the vehicle, particularly in high speed ranges, can be improved.

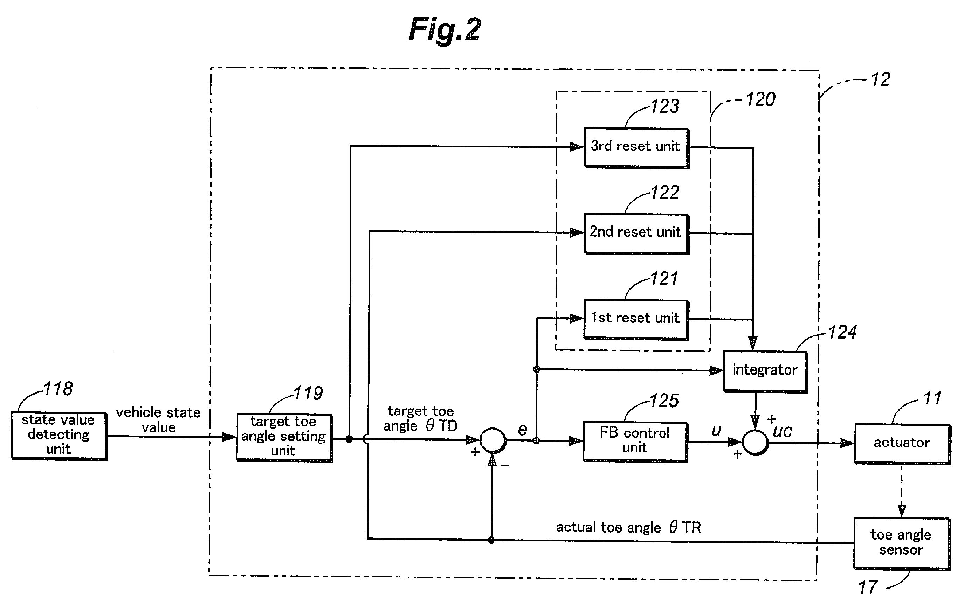

Figure 2 is a functional block diagram of a rear wheel steering control system embodying the present invention which is essentially implemented by the ECU 12. The ECU 12 may be considered as a computer system including a processor (CPU) configured to execute various arithmetic operations, random access memory (RAM) that provides a storage area for temporarily storing data and a work area for the processor, read-only-memory for storing the programs to be executed by the processor and data used for arithmetic operations, and rewritable non-volatile memory for storing the results of arithmetic operations and data from the various sensors that are required to be stored. The non-volatile memory may also consist of RAM equipped with a backup battery that maintains the supply of electric power to the memory even after the system is down.

Figure 2 shows an essential part of the rear wheel steering control system. As most part of the system is per se known, such part is omitted from the following description, and, if necessary, reference should be made to patent document 1 and other prior patent documents. In Figure 2, the various sensors (13 to 16 and others) are represented by a state value detecting unit 118. The ECU 12 comprises a target steering angle setting unit 119 that computes a target toe angle θTD by determining the operating condition of the vehicle from the output of the state value detecting unit 118 such as a detected lateral acceleration, estimating the drive force of the rear wheels 5 from an estimated engine torque, a transmission gear ratio and other parameters, and computing the target toe angle θTD from the estimated drive force of the rear wheels and the detected state value.

An actual toe angle θTR detected by the toe angle sensor 17 incorporated in each actuator 11 and forwarded to the ECU 12 via the input interface (not shown in the drawings) is subtracted from the target toe angle θTD to provide a control deviation e. The deviation e is forwarded to a feedback controller (FB controller) 125 which then provides a drive signal which is proportional in magnitude to the deviation e to the actuators 11 so as to cancel or reduce the deviation e by means of the actuation of the actuators 11. This control action essentially consists of a proportional feedback control.

The ECU 12 is additionally provided with an integral controller which essentially consists of an integrator 124. The integrator 124 integrates the control deviation e between the actual toe angle θTR and the target toe angle θTD, and the integrated value IC is added to the manipulated value u to provide a corrected manipulated value uc that is effective in eliminating or reducing the steady state deviation between the target toe angle and actual toe angle.

According to the present invention, based on the recognition that the integral control may be detrimental to a favorable control of the rear toe angle under certain situations, the ECU 12 includes a reset controller 120 consisting of a first reset unit 121, a second reset unit 122 and a third reset unit 123 that cancels or resets the integrated deviation under specific conditions. The first reset unit 121 performs this reset action when the angular motion of the steering wheel 8 is reversed in an effort to reverse the course of the vehicle. The second reset unit 122 performs this reset action when at least one of the actuators experiences a change in the frictional resistance to an output end thereof from static friction to kinetic friction. The third reset unit 123 performs this reset action when the target toe angle changes rapidly. These reset actions are performed by the respective reset units 121 to 123 according to data forwarded thereto, as interrupt routines of a main control routine that are invoked at a regular interval (10 msec, for instance).

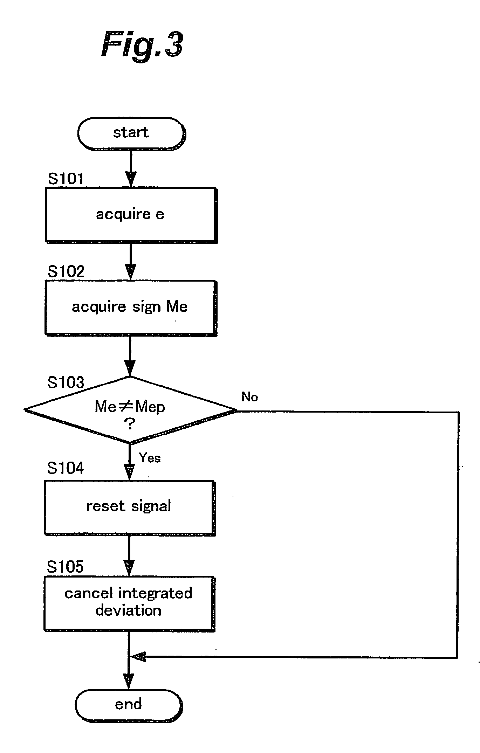

The control action of the first reset unit 121 is described in the following with reference to Figures 2 and 3. The first reset unit 121 acquires the deviation e between the target toe angle θTD and actual toe angle θTR (step S101), and determines the sign Me of the deviation e (step S102). The sign Me (indicating if the deviation e is positive or negative) is stored in the memory of the ECU 12.

The current sign Me is compared with the previously stored sign Mep in step S103. If the current sign Me is different from the previously stored sign Mep (or the sign Mep stored in an immediately preceding control cycle) (step S103: Yes), it is determined that the steering direction has been reversed. In such a situation, the feedback control may be able to respond promptly to such a change in the sign of the deviation, and provide a favorable feedback control, but the integrated value of the deviation may not be able to change the sign thereof so quickly because the influence of the past value of the deviation persists. This may cause a delay in the response of the actuators 11. Therefore, in such a situation, the first reset unit 121 forwards a reset signal to the integrator 124 (step S104), and the integrator 124 cancels, reduce or otherise resets the integrated value of the deviation (step S105). If the current sign Me remains the same as the previously stored sign Mep (step S103: No), no reset action takes place, and this routine is concluded.

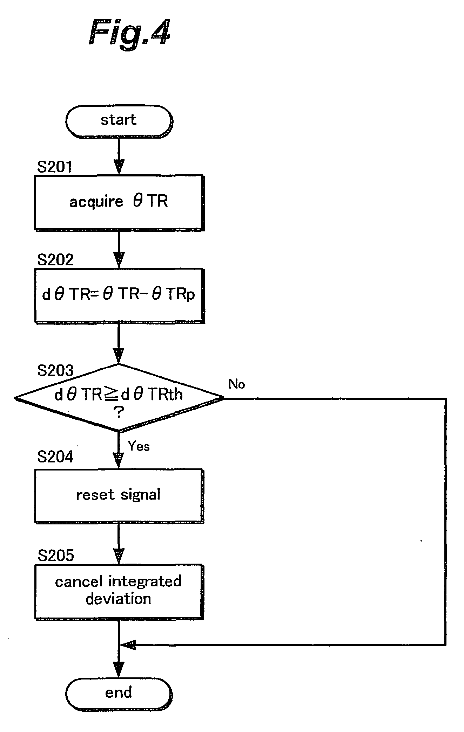

The control action of the second reset unit 122 is described in the following with reference to Figures 2 and 4. The second reset unit 122 acquires an actual toe angle θ TR from the toe angle sensor 17 (step S201), and stores the actual toe angle θTR in the memory of the ECU 12.

The previously stored actual toe angle θTRp (which may be the actual toe angle θTRp stored in an immediately preceding control cycle) is subtracted from the current actual toe angle θTR (step S202), and the computed difference dθTR is compared with a threshold value dθTRth (step S203). The threshold value dθTRth is selected so as to indicate the occurrence of a change from a static friction to a kinetic friction. Typically, the output rod of the actuator 11 remains stationary while static friction is in effect, and an abrupt movement of the output shaft occurs upon a change from static friction to kinetic friction.

If the difference dθTR is equal to or greater than the threshold value dθTRth (step S203: Yes), the second reset unit 122 forwards a reset signal to the integrator 124 (step S204) which cancels, reduces or otherwise resets the integrated value of the deviation IC in response (step S205). If the difference dθTR is smaller than the threshold value dθTRth (step S203: No), no reset action takes place, and this routine is concluded.

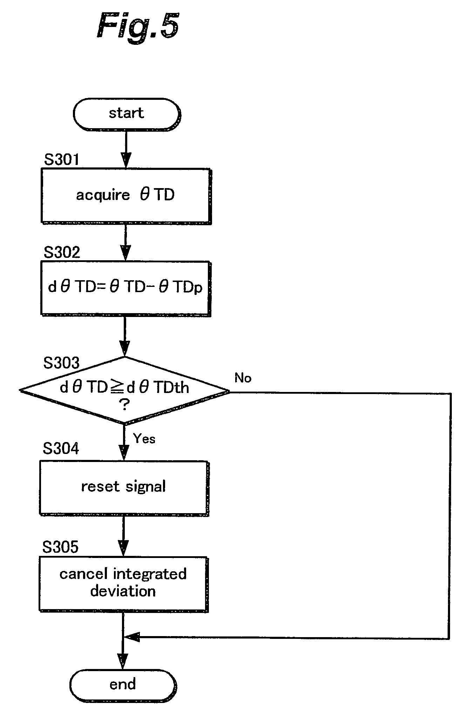

The control action of the third reset unit 123 is described in the following with reference to Figures 2 and 5. The third reset unit 123 acquires a target toe angle θTD from the ECU 12 (step 401), and stores the target toe angle θTD in the memory of the ECU 12.

The previously stored target toe angle θTDp (which may be the target toe angle θ TDp stored in an immediately preceding control cycle) is subtracted from the current target toe angle θTD (step S302), and the computed difference dθTD is compared with a threshold value dθTDth (step S303). The threshold value dθTRth is selected so as to indicate a rapid change in the target toe angle θTD. When the target toe angle θTD changes rapidly, the integral control is unable to timely respond to the change, and tends to cause an overshooting response.

If the difference dθTD is equal to or greater than the threshold value dθTDth (step S303: Yes), the third reset unit 123 forwards a reset signal to the integrator 124 (step S304) which cancels, reduces or otherwise resets the integrated value of the deviation IC to zero in response (step S305). If the difference dθTD is smaller than the threshold value dθTDth (step S303: No), no reset action takes place, and this routine is concluded.

Although the present invention has been described in terms of a preferred embodiment thereof, it is obvious to a person skilled in the art that various alterations and modifications are possible without departing from the scope of the present invention which is set forth in the appended claims.

In a rear wheel control system for a four wheeled vehicle that includes a feedback controller (125) and a integral controller (124), the control system further comprises a reset control unit (120) for canceling the integrated value of the deviation under a prescribed operating condition of the control system. Thereby, a steady state deviation between an actual toe angle of a vehicle can be minimized owing to the control action of the integral controller without the disadvantage of an excessive overshoot which the integral control may bring under certain conditions. Therefore, the rear wheel steering control system enables an actual toe angle of a vehicle to favorably follow a target toe angle without causing an excessive overshoot under all conditions.

## Claims

1. A rear wheel steering control system for a four wheeled vehicle, comprising
a target toe angle setting unit (119) for setting a target toe angle of rear wheels (5) of the vehicle according to an operating condition of the vehicle,
an actuator (11) for steering the rear wheels, and
a toe angle sensor (17) for detecting an actual toe angle of the rear wheels; and
a control unit (12) for providing a base control signal to the actuator, the control unit including a base controller (125) that provides a base control output corresponding to a deviation (e) between the target toe angle and actual toe angle, and an integral controller (124) that provides an integral control output corresponding to an integrated value of the deviation, wherein:
the control system further comprises a reset control unit (120) at least for reducing the integrated value of the deviation under a prescribed operating condition of the control system,
**characterized in that**
the control system is configured to detect a sign of the deviation, and store the detected sign at a regular interval, the reset control unit (121) at least reducing the integrated value of the deviation when a change in the sign of the deviation is detected, or **in that**
the control system is configured to store the actual toe angle at a regular interval, the reset control unit (122) at least reducing the integrated value of the deviation when a difference between a current actual toe angle and a previously stored actual toe angle is greater than a prescribed threshold value, or **in that**
the control system is configured to store the target toe angle at a regular interval, the reset control unit (123) at least reducing the integrated value of the deviation when a difference between a current target toe angle and a previously stored target toe angle is greater than a prescribed threshold value.

2. The rear wheel steering control system according to claim 1,
wherein the reset control unit (120) cancels the integrated value of the deviation under a prescribed operating condition of the control system.

3. The rear wheel steering control system according to claim 1,
wherein the base controller (125) provides a proportional control output proportional to a deviation (e) between the target toe angle and actual toe angle.

4. The rear wheel steering control system according to claim 1,
wherein the integral controller (124) provides an integral control output proportional to an integrated value of the deviation (e).

## Patentansprüche

1. Hinterradlenksteuerungssystem für ein vierrädriges Fahrzeug, umfassend:
eine Soll-Spurwinkelsetzeinheit (119) zum Setzen eines Soll-Spurwinkels von Hinterrädern (5) des Fahrzeugs gemäß einem Betriebszustand des Fahrzeugs,
einen Aktuator (11) zum Lenken der Hinterräder, und
einen Spurwinkelsensor (17) zum Erfassen eines Ist-Spurwinkels der Hinterräder; und
eine Steuereinheit (12) zum Liefern eines Basissteuersignals zu dem Aktuator, worin die Steuereinheit einen Basiscontroller (125) enthält, der eine Basissteuerausgabe entsprechend einer Abweichung (e) zwischen dem Soll-Spurwinkel und dem Ist-Spurwinkel liefert, und
einen Integralcontroller (124), der eine integrale Steuerausgabe entsprechend einem integrierten Wert der Abweichung liefert, worin:
das Steuersystem ferner eine Rücksetzsteuereinheit (120) aufweist, zumindest um den integrierten Wert der Abweichung unter einem vorbestimmten Betriebszustand des Steuerungssystems zu reduzieren,
**dadurch gekennzeichnet, dass**
das Steuerungssystem konfiguriert ist, um ein Vorzeichen der Abweichung zu erfassen und das erfasste Vorzeichen mit einem regelmäßigen Intervall zu speichern, wobei die Rücksetzsteuereinheit (121) zumindest den integrierten Wert der Abweichung reduziert, wenn eine Vorzeichenänderung der Abweichung erfasst wird, oder dass das Steuerungssystem konfiguriert ist, um den Ist-Spurwinkel mit einem regelmäßigen Intervall zu speichern, wobei die Rücksetzsteuereinheit (122) zumindest den integrierten Wert der Abweichung reduziert, wenn eine Differenz zwischen einem gegenwärtigen Ist-Spurwinkel und einem zuvor gespeicherten Ist-Spurwinkel größer als ein vorbestimmter Schwellenwert ist, oder dass
das Steuerungssystem konfiguriert ist, um den Soll-Spurwinkel mit einem regelmäßigen Intervall zu speichern, wobei die Rücksetzsteuereinheit (123) zumindest den integrierten Wert der Abweichung reduziert, wenn eine Differenz zwischen einem gegenwärtigen Soll-Spurwinkel und einem zuvor gespeicherten Soll-Spurwinkel größer als ein vorbestimmter Schwellenwert ist.

2. Das Hinterradlenksteuerungssystem nach Anspruch 1, worin die Rücksetzsteuereinheit (120) den integrierten Wert der Abweichung unter einem vorbestimmten Betriebszustand des Steuersystems löscht.

3. Das Hinterradlenksteuerungssystem nach Anspruch 1, worin der Basiscontroller (125) eine proportionale Steuerausgabe liefert, die proportional zu einer Abweichung (e) zwischen dem Soll-Spurwinkel und dem Ist-Spurwinkel ist.

4. Das Hinterradlenksteuerungssystem nach Anspruch 1, worin der Integralcontroller (124) eine integrale Steuerausgabe liefert, die proportional zu einem integrierten Wert der Abweichung (e) ist.

## Revendications

1. Système de commande de direction de roue arrière pour un véhicule à quatre roues, comprenant
une unité de réglage de l'angle de pincement à atteindre (119) pour définir un angle de pincement à atteindre des roues arrières (5) du véhicule suivant une condition d'exploitation du véhicule,
un actionneur (11) pour diriger les roues arrières et un capteur d'angle de pincement (17) pour détecter un angle de pincement réel des roues arrières; et
une unité de commande (12) pour fournir un signal de commande de base à l'actionneur, l'unité de commande incluant un régulateur de base (125) qui fournit une sortie de commande de base correspondant à une déviation (e) entre l'angle de pincement à atteindre et l'angle de pincement réel et un régulateur par intégration (124) qui fournit une sortie de commande d'intégration correspondant à une valeur intégrée de la déviation, dans lequel:
le système de commande comprend en outre une unité de commande de réinitialisation (120) au moins pour réduire la valeur intégrée de la déviation dans une condition d'exploitation prescrite du système de commande, **caractérisé en ce que**
le système de commande est configuré pour détecter un signe de la déviation et stocker le signe détecté à intervalle régulier, l'unité de commande de réinitialisation (121) réduisant au moins la valeur intégrée de la déviation lorsqu'un changement de signe de la déviation est détecté, ou en ceci que
le système de commande est configuré pour stocker l'angle de pincement réel à intervalle régulier, l'unité de commande de réinitialisation (122) réduisant au moins la valeur intégrée de la déviation lorsqu'une différence entre un angle de pincement réel momentané et un angle de pincement réel précédemment stocké est supérieure à une valeur de seuil prescrite, ou en ceci que
le système de commande est configuré pour stocker l'angle de pincement à atteindre à intervalle régulier, l'unité de commande de réinitialisation (123) réduisant au moins la valeur intégrée de la déviation lorsqu'une différence entre un angle de pincement à atteindre momentané et un angle de pincement à atteindre précédemment stocké est supérieure à une valeur de seuil prescrite.

2. Système de commande de direction de roue arrière suivant la revendication 1,
dans lequel l'unité de commande de réinitialisation (120) annule la valeur intégrée de la déviation dans une condition d'exploitation prescrite du système de commande.

3. Système de commande de direction de roue arrière suivant la revendication 1, dans lequel le régulateur de base (125) fournit une sortie de commande proportionnelle à une déviation (e) entre l'angle de pincement à atteindre et l'angle de pincement réel.

4. Système de commande de direction de roue arrière suivant la revendication 1, dans lequel le régulateur (124) fournit une sortie de commande par intégration proportionnelle à une valeur intégrée de la déviation (e).
